# EUROPEAN PATENT SPECIFICATION

(11) **EP 1 390 640 B1**
(45) Date of publication and mention of the grant of the patent: **03.08.2005**
(21) Application number: 02735982.7
(22) Date of filing: 09.05.2002
(51) Int. Cl.: F16F 9/06, F16F 9/342

(54) **GAS SHOCK ABSORBER FOR VEHICLES**
GASSTOSSDÄMPFER FÜR FAHRZEUGE
AMORTISSEUR A GAZ POUR VEHICULES

(30) Priority: 24.05.2001 IT MI20011094
(43) Date of publication of application: 25.02.2004
(73) Proprietor: K Service SrL, 20029 Turbigo (IT)
(72) Inventor: CODINI, Mauro, I-20020 Robechetto con Induno (IT)
(74) Representative: Ferroni, Filippo
(86) International application number: PCT/IT2002/000310
(87) International publication number: WO 2002/095260

(56) References cited:
- EP-A- 1 089 009
- WO-A-94/08808
- GB-A- 2 318 168
- US-A- 3 164 381
- DATABASE WPI Week 8420 Derwent Publications Ltd., London, GB; AN 1984-126483 XP002210658 & SU 1 036 974 A (VOLZHSK SALOON CARS), 23 August 1983 (1983-08-23)

## Description

This invention refers to a gas shock absorber for vehicles in general, such as motorbikes, cars, coaches, etc.

As is known, these shock absorbers are provided with a piston sliding in a cylindrical chamber containing oil, which produces viscous damping of the stresses applied to the suspension of the vehicle during driving; for this purpose, the piston is mounted on a guide rod which projects from the cylindrical chamber and is secured onto the vehicle chassis.

The forward and backward movements of the rod in the chamber following the aforesaid stresses, cause variations in the volume available for the oil contained therein; these variations are offset by the presence of a cushion of gas (usually nitrogen), whose volume can be reduced by compressing it to leave space for the oil.

Various configurations for gas shock absorbers based on this principle are known.

In one of these configurations (see for instance WO-A-98 08808), the rod with the damping piston moves inside a main cylindrical chamber communicating with a transfer chamber via a rigid duct or flexible tube, thus enabling the oil to flow from one to the other and vice versa, according to the forward and backward movements of the rod with the piston.

The aforementioned gas cushion is present in the transfer chamber, and is kept separate from the oil by means of a separating piston; the latter is essentially a floating diaphragm, with the oil on one side and the gas on the other.

Another known type of shock absorber provides for the use of a cylindrical chamber only, without the transfer chamber.

In this solution the gas cushion is located at one end of this chamber, remote from the end where the rod projects; to separate the gas from the oil, a floating piston as previously described can be used again, or advantage can be taken of the immiscibility of the oil with certain gases to create two separate phases, one liquid and one gaseous, having a separating interface, without the need for a separator piston. In this case, reference is also made to emulsion shock absorbers.

There are also shock absorbers in which the transfer chamber surrounds the cylindrical chamber, forming a tubular space around it; here again the oil and the gas can be separated by means of a piston (ring-shaped), or two separate phases can be created by taking advantage of the nature of the fluids.

An important aspect which generally relates to the performance of gas shock absorbers consists of the progressive nature of their action; indeed they must not act too rigidly, which would prejudice comfort, but they must not be too soft either, otherwise they could create problems with the stability and driving of the vehicle.

For this purpose, shock absorbers have recently been developed which have appropriate damping devices (other than the normal plates and other systems commonly applied to the piston guided by the rod) to vary their action increasingly when the piston reaches a predetermined position.

However, these devices can only be used with shock absorbers which have transfer chambers; indeed their operating principle is based on the use of fixed elements arranged within the cylindrical chamber, which interact with the piston and/or the rod moving forward into the chamber, in such a way as to slow down its movement progressively.

A typical example of these systems consists of a tapered pin fixed centrally on the bottom of the cylindrical chamber which, when the damping piston guided by the rod approaches it, closes an axial duct present in the rod to enable the oil to flow inside it.

Thanks to the tapered shape of the pin, the duct becomes blocked gradually and therefore the resistance to the forward movement of the piston in the cylindrical chamber increases progressively as the piston moves, after it has reached a particular position.

Another known damping system has a bell-shaped element arranged on the bottom of the main chamber, which forms in practice a second cylindrical chamber concentric with, and having a smaller diameter than, the main chamber.

Two pistons are arranged on the rod: one located farther forward and having diameter corresponding to that of the aforesaid bell, whereas the other has diameter equal to that of the main chamber; since the first piston is farther forward than the second with rference to the advancing movement of the rod, it enters the bell when the rod penetrates into the chamber beyond a predetermined limit.

When the smaller piston enters the bell, the shock absorber oil present in the bell causes an additional resistance which is added to that met by the larger piston moving in the main chamber; as a result, the total action of the shock absorber increases when the rod reaches the position where the smaller piston enters the bell.

As stated above, the main limitation in the prior art considered herein lies in the fact that the damping systems can only be used in shock absorbers equipped with a transfer chamber.

Indeed, it is clear that the tapered pin or bell arranged on the bottom of the main chamber where the rod moves forward with the piston, cannot be reconciled with the presence of a gas cushion at the end of the said chamber, like that in the gas shock absorber without transfer chamber.

The technical problem underlying this invention is therefore how to overcome this state of the art.

The solution to this problem lies in associating a damping device with the piston which separates the oil from the gas.

In this way, the damping device is in fact independent of the type of shock absorber (with or without transfer chamber) to which it is applied; it is indeed clear that the separation between oil and gas exists in all gas shock absorbers and therefore, in accordance with the teaching of the invention, this feature can be utilized to apply the damping device in this area.

The invention makes available a shock absorber whose characteristics are set out in the claims appended to this description.

The invention also allows to obtain considerable advantages which will be better understood from few non-limiting embodiments thereof, described here below with reference to the appended drawings, in which:

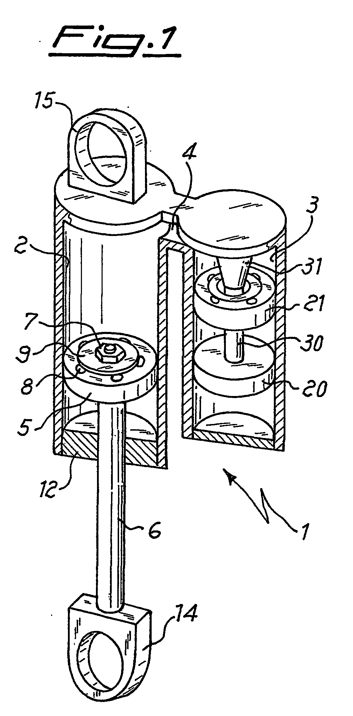

- Figure 1 shows a perspective view, with a part removed, of a first shock absorber according to the present invention;
- Figures 2, 3, and 4 show longitudinal sections of the shock absorber of Figure 1, in respective operating conditions;
- Figure 5 shows a longitudinal section of a second embodiment of shock absorber in accordance with the present invention;
- Figures 6, 7, 8, and 9 show longitudinal sections of respective further embodiments of shock absorbers according to this invention.

With reference to these figures, numeral 1 indicates generally a shock absorber according to the invention which comprises a cylindrical main chamber 2 communicating with a transfer chamber 3, cylindrical too, by means of a duct 4.

A piston 5 fixed at the end of an actuator rod 6 by a nut 7, slides in the main chamber 2; a series of oil-flow apertures 8 extend through the thickness of the piston 5 which has some plates 9 and 10 for regulating the oil flow, such plates consisting of washers placed on its upper and lower faces respectively. Both the apertures and the plates mentioned above are of known types and further details about them are therefore not given.

The rod 6 projects from the main chamber 2 through a base 12 thereof (in which one or more seal rings are housed, are not shown in the drawings) and, at its outer end, an eyelet 14 is arranged for fixing the shock absorber to the motorcycle; there is a similar eyelet 15 at the opposite end, outside the main chamber 2.

As stated above, the transfer chamber 3 communicates with the main chamber 2 through the duct 4 in such a way as to permit the oil to circulate from one to the other and vice versa; in this embodiment, the said duct consists of a short rigid tube which connects the main chamber 2 and the transfer chamber 3 so that the shock absorber assembly forms a rigid, compact body. The duct could however consist of a long hose, extending between the cylindrical chamber and the transfer chamber, so that they could therefore be considerably farther in a similar solution and the shock absorber would no longer be a single rigid, compact body.

A floating piston 20 is housed in the transfer chamber 3, separating the oil from the gas cushion; this piston is free to slide along the chamber 3 following to the expansions or contractions of the volume Vg of gas (nitrogen or other gas), located in its lower part.

In the chamber 3 there is also a damping device consisting of a diaphragm 21 arranged transverse thereto and in which oil flow apertures 22 similar to those present in the actuator piston 5, are arranged.

The flow of oil through the apertures 22 is regulated by some plates 23 and 24 placed on the two faces of the diaphragm 21, which are held in position by a bushing 25.

More specifically, this bushing extends centrally through the diaphragm 21 to which it is fixed by means of a threaded nut 26 on its lower end, while its upper end has a flange 27 which is used as a support for a coil spring 28, acting between the flange and the plate 23 placed on the upper face of diaphragm 21.

Inside the bushing 25 there is a shutter rod 30 integral at the bottom with the separator piston 20 and having a tapered shape whose cross-section increases towards the free top end 31.

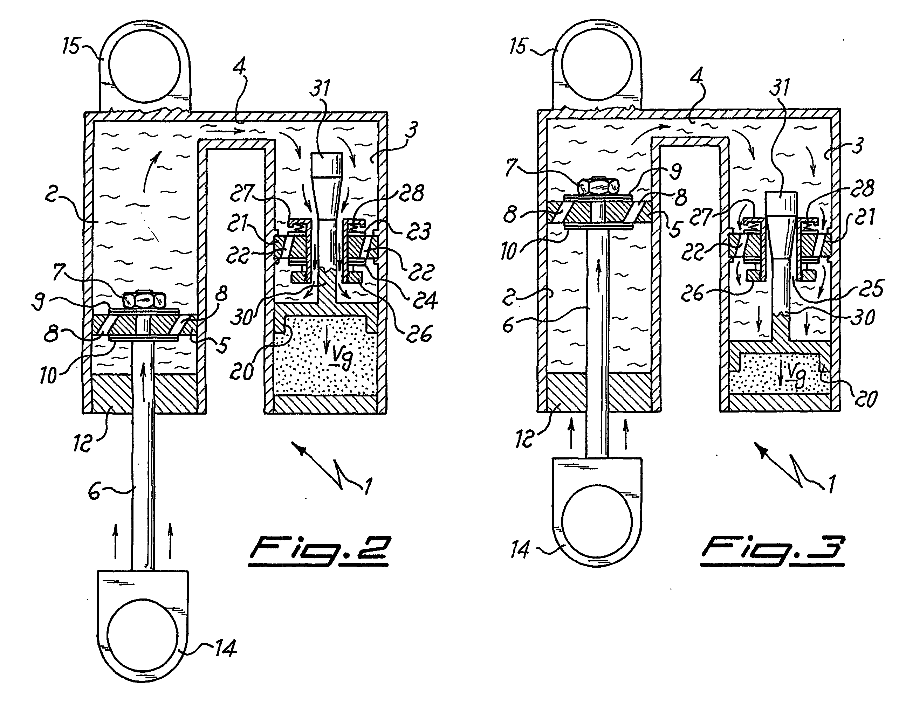

The shock absorber 1 described above works as follows; reference will be made for this purpose to figures 2-4, which show the shock absorber at the beginning and at the end of the compression phase, as well as at the beginning of the rebound phase following the compression, respectively.

As can be seen, when from an initial rest condition the piston 5 and the rod 6 start to move forward in the cylindrical chamber 2 as the shock absorber begins to descend, the oil is pushed into the transfer chamber 3 through the duct 4.

In this condition, the separator piston 20 is in a raised position as in Figure 2 because of the effect of the expansion of the gas present in the volume Vg, while the tapered end 31 of the shutter rod 30 is separated from the bushing 25, thereby enabling the oil to pass inside it.

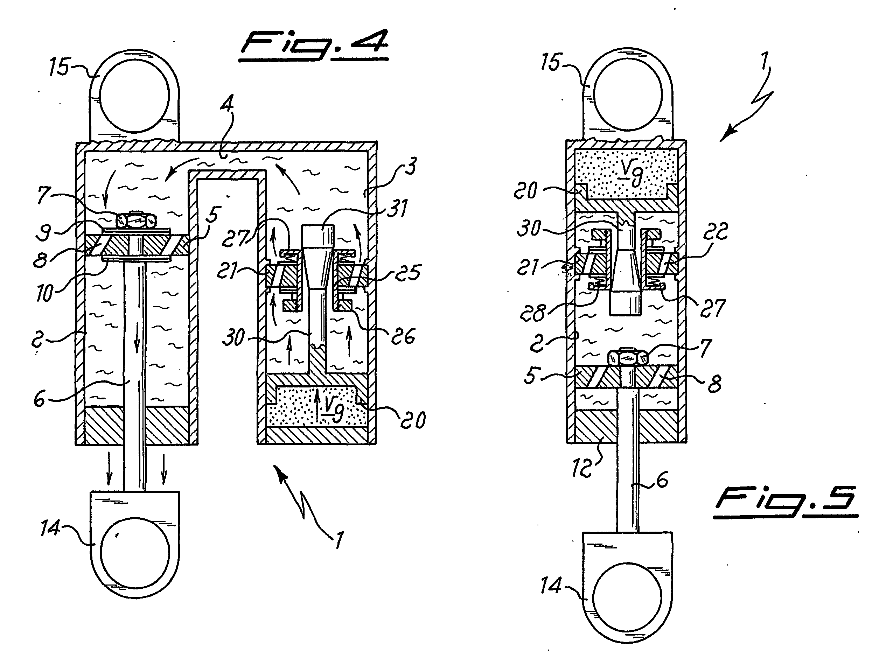

As the rod 6 and the piston 5 move gradually forward into the main chamber 2, the oil pressure increases; this causes a flow of oil in opposite direction to their forward movement, through the apertures 8 of the piston 5, and a transfer of oil into the chamber 3, forcing down the separator piston 20 which compresses the gas in volume Vg (see Figure 3).

The movement of the separator piston 20 causes the shutter rod 30 also to descend with it, so that the tapered end 31 of the shutter rod 30 progressively closes the oil passage inside the bushing 25.

In this situation the oil flows solely through the apertures 22 in the diaphragm 21, overcoming the resistance of plates 23 and 24.

By selecting the rigidity of the plates appropriately, it is possible to ensure that the resistance to the flow of the oil, first inside bushing 25 and then through apertures 22, increases gradually up to the end of the travel of the piston 5 actuated by the rod 6.

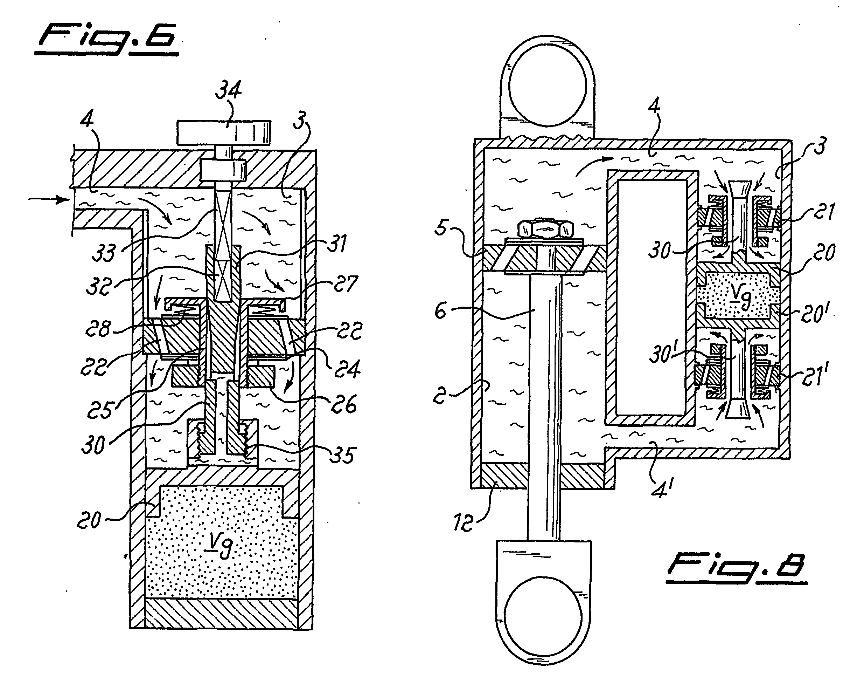

From this point the shock absorber extension phase shown in Figure 4 begins, during which the flow of the oil is reversed under the thrust exerted by the gas which expands in volume Vg.

In this condition the oil first flows through apertures 22 and then, as the movement of the piston 20 gradually raises the shutter rod 30, also flows inside the bushing 25 left free by the tapered end 31 of the shutter rod 30; at the same time, the first piston 5 and the rod 6 return to the position in Figure 2.

From the foregoing, it can be understood how the shock absorber considered above achieves the object of the invention.

By looking at the drawings, indeed, it can immediately be seen how the shock absorber device associated with the separator piston 20 makes it possible to eliminate any element fitted on the bottom of the cylindrical chamber 2, such as the tapered pin or bell mentioned above in relation to the prior art.

In other words, this means that, while the embodiment considered above relates to a shock absorber with a transfer chamber for the oil, the invention can also be advantageously applied to shock absorbers which do not have such a chamber, as shown in Figure 5, where the elements structurally or functionally equivalent to those already described are indicated with the same numbering.

From this figure it can easily be seen that the shock absorber 1 has a single main chamber 2 in which the respective piston 5 slides and at the end of which there is a gas cushion contained in the volume Vg bounded by the separator piston 20.

Utilizing the method of operation described for the previous embodiment to which reference is made for the sake of brevity, the tapered portion 31 of the shutter rod 30 (integral with the separator piston 20) brings about a resisting effect on oil flowing axially through the diaphragm 21, which is added to that met by the forward movement of the main piston 5, thereby conferring to the shock absorber 1 the progressive action required.

However, further major advantages are achieved by the shock absorbers in accordance with this invention.

First of all, emphasis must be placed on the way in which the mobile parts of the damping device, i.e. the shutter rod 30 integral with the separator piston 20, are not subject.to the application of forces from outside the shock absorber, but only to variations in the pressure of fluids; this makes it possible to prevent collisions between fixed parts and moving parts of the damping device.

Indeed, in the prior art progressive damping was achieved by the interaction between a fixed element in the cylindrical chamber (the tapered pin or the bell) and an element moving with the main rod (the axial duct or second piston); however, since the external forces acting on the suspension of the vehicle were applied directly to the rod, the latter was subject to direct impulsive stresses whose magnitude was not always predictable.

It is therefore necessary to provide stop means, such as shoulders or the like, for stopping the forward movement of the rod and to prevent the main piston from ending up against the tapered pin or the bottom of the bell; these means cause contact which, in time, could lead to deterioration of the surfaces and malfunctioning of the shock absorber.

In this invention, on the other hand, the progressive damping system is controlled by the movements of the separator piston, which moves because of the different pressures of the fluids acting on its surfaces; these pressures can be used to stop the movements of the separator piston, instead of the stop means mentioned above, because it is sufficient to ensure that the forces of the fluids acting on its opposite faces be equal to each other, when the piston reaches the required travel limit position.

Another important effect achieved by the shock absorbers according to the invention, consists of the fact that they make it possible to reduce the heat dissipated by the friction due to the flow of the oil within the damping systems.

For this purpose it must be pointed out that generally in shock absorbers the amplitude of the forward and backward movements of the rod 6 is greater by approximately one order of magnitude, than the corresponding movements of the separator rod 20; typically, in fact, the rod with the main piston has a travel of 6 - 12 cm, whereas the separator piston performs excursions of 3 - 10 mm.

This is due to the fact that the movements of the separator piston serve to offset the variations in volume available for the oil inside the main chamber, following to the penetration of the rod inside the aforesaid chamber.

Since the rod has a smaller cross section than that of the separator piston (as can also be seen from Figure 2-5), it is clear that for obtaining parity between the volumes of oil and gas displaced, the travel of the rod will be greater than that of the separator piston; as a result, the respective velocities will also be proportionally different, given that the travels of the rod and of the separator piston take place in the same interval of time.

This implies that in the damping systems of the prior art, the speed of the oil flow relative to the moving parts, i.e. the rod with the piston which moves towards the tapered pin or the bell placed on the bottom of the cylindrical chamber, is greater than in the case of the devices associated with the separator piston, as in the present invention.

Losses through friction due to the speed of the oil flow will consequently also be greater, as will the corresponding heat dissipated; in this context it must be remembered that overheating of the oil can cause a variation in its viscosity which will adversely affect the operating characteristics of the shock absorber.

A further advantage of the invention arising from the association of the damping device with the oil-gas separating piston, is that it takes up less space than those of the prior art.

It is indeed clear that since the separator piston makes movements of lesser amplitude than those of the rod for the reasons explained above, the association of a damping device with the separator piston involves a smaller increase in dimensions (other conditions remaining unchanged) than is the case of the known shock absorbers, where this device is associated with the rod and with the piston fitted on its end.

Naturally, variations of the invention with respect to the foregoing cannot be excluded.

For this purpose reference is made to Figure 6, which shows an alternative embodiment of the shock absorber; for sake of convenience, in this figure the elements structurally or functionally equivalent to those already described are indicated with the same numerical references.

In substance, this second embodiment of shock absorber differs from the first one in that the length of the rod 30 can be varied in such a way to obtain a different opposing action of the gas in the volume Vg, and thus also a different progressive behaviour of the shock absorber.

For this purpose the tapered end 31 of the shutter rod 30 has a prismatic cavity 32 in which a key 33 of complementary shape, similar to a hexagonal wrench, is engaged; the end of this key protrudes from the transfer chamber 3 and can be manoeuvred using a knob 34 or handle of any other type, in order to bring about the rotations of the key 33 and thus of the rod 30.

The latter is connected to the separator piston 20 by means of a thread 35: as can be understood from Figure 6, when the key 33 is turned by means of the knob 34, it transmits its rotation to the rod 30 that is unscrewed or screwed along the thread 35 and moves with respect to the separator piston 20, thereby varying the overall length of the rod-piston assembly according to the adjustment required.

In a preferred embodiment, the key 33 is locked in the preselected position by a spring mechanism connected thereto or by any other useful means for this purpose.

This variant of the shock absorber according to the invention functions as already explained above.

In the compression phase, the oil flows through the bushing 25 until the tapered end 31 obstructs its passage; it then flows through the apertures 22 of the diaphragm 21.

The upward and downward movements of the piston 20 which accompany the various operating phases of the shock absorber are not obstructed by the coupling between the key 33 and the cavity 32 since, as these form a prismatic pair, they do not impede the axial movements of the rod 30 integral with the piston 20.

Many variants of the invention can then be obtained by changing the configuration of the elements with which the additional damping effect is obtained.

For example, several diaphragms 21 can be arranged in the transfer chamber or in the main chamber according to the type of shock absorber (i.e. with or without transfer chamber) to which the invention is applied, the shutter rod extending through the diaphragms 21 in series; the shutter rod will then have a configuration different from that shown in the appended drawings, with tapered portions present along it in the regions of the various diaphragms, or with washers or other means shutting off the oil flow in connection with the various positions taken up by the separator piston.

It should however be clear that the damping devices or systems may differ, even considerably, from those considered above; in other words, it is not necessary that there be a diaphragm and a shutter rod cooperating with each other to obtain a resisting effect, but instead there may be different systems where the diaphragm and/or rod mentioned above are not present, and other means for obtaining this effect are used instead.

For example, a damping device could be designed with a bell element arranged in the transfer chamber or in the main chamber (according to whether or not the shock absorber has such a transfer) and with another piston of smaller diameter mounted on the separator piston, the smaller-diameter piston being designed to enter the bell element in a manner similar to that already described with reference to the prior art.

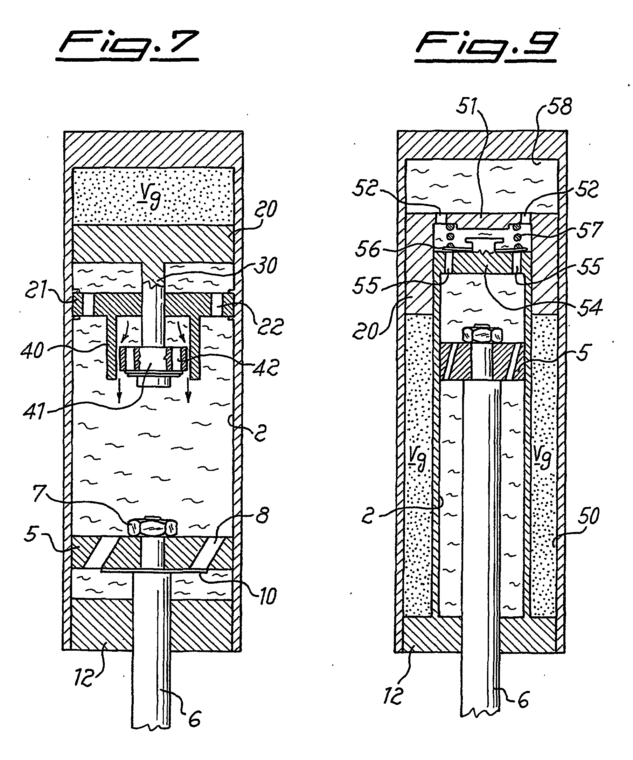

This variant is shown in Figure 7 where, likewise the previous embodiment, elements structurally or functionally equivalent to those already seen have been indicated in the same way.

As can be seen, in this case the shock absorber is of the type with no transfer chamber and the damping device comprises a bell 40 arranged on the diaphragm 21 coaxial with the main chamber 2.

On the end of the rod 30 which extends beyond the diaphragm 21, there is a damping piston 41 which slides within the bell 40 and is supplied with apertures 42 for the oil passing there through.

It is easy to see that the additional damping action supplied by the foregoing device depends on the movement of the damping piston 41 in the bell 40 as it occurs in the analogous devices of the prior art.

However, unlike the latter, the said movement is imparted by the displacement of the separator piston 20 as a result of the functioning of the aforesaid shock absorber.

It follows that with this variant of the invention, the same advantageous results already explained can be obtained.

More generally it can be said that the shapes of the elements designed to damp the forward movement of the rod may differ considerably, on condition that they make it possible to shut off the flow of the oil by utilizing the movements of the separator piston.

Finally, it cannot be excluded that shock absorbers according to the invention be made in which two or more separator pistons are combined.

For instance, reference should be made to the embodiment shown in Figure 8 wherein the gas cushion Vg is defined between two opposed separator pistons 20 and 20', on whose faces the gas pressure acts on one side and the oil pressure acts on the other side (in the previous embodiments described, the gas is instead contained between the separator piston 20 and the bottom of the transfer chamber 3 or of the cylindrical chamber 2).

If the main chamber 2 is put into communication with the zone adjacent to the second separator piston 20' in order to apply the oil pressure thereon as well, a progressive damping system is obtained as required in which the two separator pistons can be used to obtain the progressive damping effect.

Finally, it must be pointed out that this invention and the teachings arising therefrom are also applicable to shock absorbers with a transfer chamber formed by a tubular space coaxial outside the main chamber 2; it will however be understood that in these cases, the configuration of the damping device may differ considerably from the embodiments which have been shown heretofore.

Indeed, in these circumstances the separator piston will essentially take the form of a tubular section; for this purpose reference should be made to Figure 9 which shows a last embodiment of the invention, made according to this principle.

As is shown, in this case the gas cushion Vg is in the tubular space 50 which surrounds the cylindrical chamber 2, where the main piston 5 slides and is moved by rod 6; the separation between the oil contained in the cylindrical chamber 2 and the gas present in the space 50 is ensured by the piston 20.

As mentioned above, the latter is a tubular section with a radial width equal to that of the space; in accordance with this embodiment, the tubular section is closed centrally by a base 51 wherein oil flow apertures 52 are arranged.

In this case also the cylindrical chamber 2 in which the piston 5 moves, is closed by a base 54 pierced by oil flow apertures 55; the oil flow is preferably regulated by one or more plates 56 on which a spring 57 acts.

Thus, when the main piston 5 moves forward in the chamber 2, it thrusts the oil through the apertures 55, 56 into transfer chamber 58; the consequent increase in the oil pressure displaces the tubular section 20 downwards (with reference to Figure 9), compressing the gas cushion Vg.

The downward displacement of the tubular section 20 compresses the spring 57 whose proportional force applied to the plates 56 closes the apertures 55 progressively; as a consequence, the oil flow is regulated and with it the damping effect required.

When the main piston 5 moves back in the cylindrical chamber 2, the reverse of the above will take place.

Also this embodiment of the invention, described by way of example, may be modified; for instance, the base 51 on the tubular portion 20 and the base 54 in the cylindrical chamber 2 could be different or might be replaced with other elements. Furthermore, it is also evident that this shape of the gas cushion Vg (i.e. the tubular space) may be applied to an oil transfer chamber like those of the other embodiments considered above.

All of the variants which have been mentioned above fall within the scope of the appended claims.

## Claims

1. Gas shock absorber for vehicles in general, comprising a main chamber (2) containing a viscous fluid in which a piston can slide (5) moved by a rod (6) projecting from the chamber, a gas cushion (V g) separated from the viscous fluid by a floating separator piston (20), and a damping device for varying the resistance to the forward movement of the piston operated by the rod in the main chamber when the piston (5) reaches a predetermined position, **characterised in that** the damping device comprises at least one first element (30, 31) which is integral with the floating separator piston and at least one second element (21-28; 40-42; 51-57) which is substantially fixed relative to the damping device, whereby the at least one first element can cooperate with at least one of the second element (21-28; 40-42; 51-57) to shut off the flow of the viscous fluid and to vary the aforesaid resistance to forward movement.

2. Shock absorber according to claim 1, comprising a transfer chamber (3) which communicates with the main chamber (2) for the flow of the viscous fluid from one to the other and vice versa, in which the first and second elements (21-28; 30-31; 40-42; 51-57) are located.

3. Shock absorber according to claim 1, wherein the gas cushion (Vg) is in the main chamber (2) at the end remote from the end through which the rod (6) projects.

4. Shock absorber according to claim 2, wherein the damping device comprises a shutter rod (30) protruding from the face of the separator piston (20) in contact with the viscous fluid, and extending through at least one diaphragm (21) arranged transverse the transfer chamber (3).

5. Shock absorber according to claim 3, wherein the damping device comprises a shutter rod (30) protruding from the face of the floating separator piston (20), in contact with the viscous fluid, and extending through at least one diaphragm (21) arranged transverse the main chamber (2).

6. Shock absorber according to claim 4 or 5, wherein the shutter rod (30) comprises a tapered portion (31) which progressively closes an axial opening of said at least one diaphragm (21), in accordance with the translational movements of the floating separator piston (20).

7. Shock absorber according to claim 6, wherein apertures (22) are present in the diaphragm (21) for the passage of the viscous fluid through the diaphragm (21) and in which plates (23, 24) associated with the diaphragm regulate the passage of the fluid through these apertures.

8. Shock absorber according to claim 4, wherein the shutter rod (30) is rendered integral with the floating separator piston (20) by means of a threaded connection (35), and in which the free end (31) of the shutter rod (30) is associated so as to be slidable axially, with a key (33) operated from outside the transfer chamber (3).

9. Shock absorber according to claim 8, wherein the key (33) is of prismatic shape and is engaged in a cavity (32) of complementary shape present at the free end (31) of the shutter rod (30).

10. Shock absorber according to claim 1 or 2, wherein the aforementioned at least one element of the damping device integral with the floating separator piston (20) comprises a disk which is fixed to the end of a rod extending from this piston, and is designed to engage in a bell element (40) which forms the substantially fixed element of the damping device.

11. Shock absorber according to claim 1 or 2, wherein the gas cushion (Vg) is arranged in a tubular space (50) coaxial with the main chamber (2) or with the transfer chamber, and the floating separator piston (20) is substantially configured as a tubular section.

12. Shock absorber according to claim 1, wherein the gas cushion (Vg) is included between two floating separator pistons (20).

13. Shock absorber according to claim 12, comprising a transfer chamber (3) in which the gas cushion (Vg) is located between the two floating separator pistons (20), and which communicates with the cylindrical chamber (2) via at least two ducts (4, 4') for the flow of the viscous fluid.

## Patentansprüche

1. Gasdruckstoßdämpfer für Fahrzeuge im allgemeinen, bestehend aus der mit einem zähflüssigen Medium gefüllten Hauptkammer (2), in dem ein Kolben (5) über eine aus der Kammer austretende Stange (6) verschoben wird, einem von dem zähflüssigen Medium durch einen Schwimmtrennkolben (20) abgetrennten Gaspolster (V g) und einem Dämpfungselement zur Veränderung des Widerstandes gegen die Vorwärtsbewegung des über die Stange in der Hauptkammer betätigten Kolbens, wenn der Kolben (5) eine vorbestimmte Position erreicht hat, **dadurch gekennzeichnet, daß** das Dämpfungselement aus zumindest einem ersten, mit dem Schwimmtrennkolben eine Einheit bildenden Element (30, 31) besteht, und aus zumindest einem zweiten Element (21-28; 40-42; 51-57), das im wesentlichen relativ zu dem Dämpfungselement befestigt ist, wodurch das zumindest eine erste Element mit zumindest einem zweiten Element (21-28; 40-42; 51-57) zusammenwirken kann, um den Strom des zähflüssigen Mediums zu unterbrechen und den vorgenannten Widerstand gegen die Vorwärtsbewegung zu verändern.

2. Stoßdämpfer nach Anspruch 1, bestehend aus einer Überleitkammer (3), die mit der Hauptkammer (2) hinsichtlich der Fließbewegung des zähflüssigen Mediums von der einen in die andere Kammer und umgekehrt kommuniziert und in der sich die ersten und zweiten Elemente (21-28; 30-31; 40-42; 51-57) befinden.

3. Stoßdämpfer nach Anspruch 1, bei dem sich das Gaspolster (Vg) an dem Ende der Hauptkammer (2) befindet, welches dem Ende gegenüberliegt, an dem die Stange (6) austritt.

4. Stoßdämpfer nach Anspruch 2, bei dem das Dämpfungselement eine Schließstange (30) beinhaltet, die ausgehend von der mit dem zähflüssigen Medium in Kontakt befindlichen Fläche des Trennkolbens (20) durch zumindest eine quer zur Überleitkammer (3) angeordneten Membran (21) hindurchgeführt wird.

5. Stoßdämpfer nach Anspruch 3, bei dem das Dämpfungselement eine Schließstange (30) beinhaltet, die ausgehend von der mit dem zähflüssigen Medium in Kontakt befindlichen Fläche des Schwimmtrennkolbens (20) durch zumindest eine quer zur Hauptkammer (2) angeordneten Membran (21) hindurchgeführt wird.

6. Stoßdämpfer nach Anspruch 4 oder 5, bei dem die Schließstange (30) einen konisch verlaufenden Abschnitt (31) beinhaltet, der in Abhängigkeit von den translatorischen Bewegungen des Schwimmtrennkolbens (20) eine axiale Öffnung der besagten zumindest einen Membran (21) progressiv verschließt.

7. Stoßdämpfer nach Anspruch 6, bei dem sich in der Membran (21) Öffnungen (22) zum Durchtritt des zähflüssigen Mediums durch die Membran (21) befinden und in der Platten (23, 24), die mit der Membran verbunden sind, den Durchtritt des Mediums durch diese Öffnungen reguliert.

8. Stoßdämpfer nach Anspruch 4, bei dem die Schließstange (30) so ausgebildet ist, daß sie mit dem Schwimmtrennkolben (20) mittels einer Schraubverbindung (35) eine Einheit bildet, und in dem das freie Ende (31) der Schließstange (30) mit einer Paßfeder (33) axial verschiebbar verbunden ist, die von außerhalb der Überleitkammer (3) betätigt wird.

9. Stoßdämpfer nach Anspruch 8, bei dem die Paßfeder (33) eine prismatische Form aufweist und sich in einen Hohlraum (32) einfügt, der eine komplementäre Form hat und am freien Ende (31) der Schließstange (30) angeordnet ist.

10. Stoßdämpfer nach Anspruch 1 oder 2, bei dem der vorgenannte zumindest eine Teil des mit dem Schwimmtrennkolben (20) eine Einheit bildenden Dämpfungselements einen Schieber aufweist, der mit dem Ende einer von diesem Kolben ausgehenden Stange verbunden und so konzipiert ist, daß er in ein Glockenelement (40) eingreift, das den im wesentlichen feststehenden Teil des Dämpfungselements darstellt.

11. Stoßdämpfer nach Anspruch 1 oder 2, bei dem sich das Gaspolster (Vg) in einem röhrenförmigen Raum (50) befindet, der koaxial zu der Hauptkammer (2) oder Überleitkammer angeordnet ist, wobei der Schwimmtrennkolben (20) im wesentlichen als röhrenförmiger Abschnitt ausgebildet ist.

12. Stoßdämpfer nach Anspruch 1, bei dem sich das Gaspolster (Vg) zwischen zwei Schwimmtrennkolben (20) befindet.

13. Stoßdämpfer nach Anspruch 12, bestehend aus einer Überleitkammer (3), in der sich das Gaspolster (Vg) zwischen zwei Schwimmtrennkolben (20) befindet, und die mit der zylindrischen Kammer (2) über zumindest zwei Kanäle (4, 4') zur Übertragung des zähflüssigen Mediums kommuniziert.

## Revendications

1. Amortisseur à gaz sous pression pour véhicules en général, comprenant une chambre principale (2) contenant un fluide visqueux, dans laquelle un piston peut coulisser (5), déplacé par une tige (6) dépassant de la chambre, un coussin de gaz (Vg) séparé du fluide visqueux par un piston à séparateur flottant (20), et un dispositif amortisseur pour faire varier la résistance au mouvement d'avance du piston commandé par la tige dans la chambre principale lorsque le piston (5) atteint une position prédéterminée, **caractérisé en ce que** le dispositif amortisseur comprend au moins un premier élément (30, 31) qui est solidaire du piston séparateur flottant et au moins un deuxième élément (21-28 ; 40-42 ; 51-57) qui est sensiblement fixe par rapport au dispositif amortisseur, de sorte que le au moins un premier élément peut coopérer avec le au moins une deuxième élément (21-28 ; 40-42 ; 51-57) pour couper l'écoulement du fluide visqueux et pour faire varier la résistance au mouvement d'avance mentionnée ci-dessus.

2. Amortisseur selon la revendication 1, comprenant une chambre de transfert (3) qui communique avec la chambre principale (2) pour l'écoulement du fluide visqueux entre l'une et l'autre et vice versa, dans lesquelles se trouvent les premiers et les deuxièmes éléments (21-28 ; 30-31 ; 40-42 ; 51-57).

3. Amortisseur selon la revendication 1, dans lequel le coussin de gaz (Vg) se trouve dans la chambre principale (2) à l'extrémité éloignée de l'extrémité à travers laquelle la tige (6) dépasse.

4. Amortisseur selon la revendication 2, dans lequel le dispositif amortisseur comprend une tige d'obturateur (30) dépassant de la face du piston séparateur (20) en contact avec le fluide visqueux et s'étendant à travers au moins un diaphragme (21) disposé transversalement à la chambre de transfert (3).

5. Amortisseur selon la revendication 3, dans lequel le dispositif amortisseur comprend une tige d'obturateur (30) dépassant de la face du piston séparateur flottant (20) en contact avec le fluide visqueux et s'étendant à travers au moins un diaphragme (21) disposé transversalement à la chambre principale (2).

6. Amortisseur selon la revendication 4 ou 5, dans lequel la tige d'obturateur (30) comprend une partie conique (31) qui ferme progressivement une ouverture axiale dudit au moins un diaphragme (21) en fonction des mouvements de translation du piston séparateur flottant (20).

7. Amortisseur selon la revendication 6, dans lequel des ouvertures (22) sont présentes dans le diaphragme (21) pour le passage du fluide visqueux à travers le diaphragme (21) et dans lequel des plaques (23, 24) associées au diaphragme régulent le passage du fluide à travers ces ouvertures.

8. Amortisseur selon la revendication 4, dans lequel la tige d'obturateur (30) est rendue solidaire du piston séparateur flottant (20) à l'aide d'un raccord fileté (35), et dans lequel l'extrémité libre (31) de la tige d'obturateur (30) est associée avec une clavette (33) commandée de l'extérieur de la chambre de transfert (3) de manière à pouvoir coulisser axialement.

9. Amortisseur selon la revendication 8, dans lequel la clavette (33) a une forme prismatique et est en prise dans une cavité (32) présentant une forme complémentaire présente à l'extrémité libre (31) de la tige d'obturateur (30).

10. Amortisseur selon la revendication 1 ou 2, dans lequel le au moins un élément du dispositif amortisseur solidaire du piston séparateur flottant (20) comprend un disque qui est fixé à l'extrémité d'une tige partant de ce piston et qui est conçu pour venir en prise dans un élément de cloche (40) qui forme l'élément sensiblement fixe du dispositif amortisseur.

11. Amortisseur selon la revendication 1 ou 2, dans lequel le coussin de gaz (Vg) est disposé dans un espace tubulaire (50) coaxial à la chambre principale (2) ou à la chambre de transfert et le piston séparateur flottant (20) est sensiblement configuré comme une section tubulaire.

12. Amortisseur selon la revendication 1, dans lequel le coussin de gaz (Vg) est inclus entre deux pistons séparateurs flottants (20).

13. Amortisseur selon la revendication 12, comprenant une chambre de transfert (3) dans laquelle le coussin de gaz (Vg) est placé entre les deux pistons séparateurs flottants (20) et qui communique avec la chambre cylindrique (2) par l'intermédiaire d'au moins deux passages (4, 4') pour l'écoulement du fluide visqueux.
